# EUROPEAN PATENT SPECIFICATION

(11) **EP 1 260 427 B1**
(45) Date of publication and mention of the grant of the patent: **24.01.2007**
(21) Application number: 02253559.5
(22) Date of filing: 21.05.2002
(51) Int. Cl.: B62D 25/08, B60R 16/04, B60K 5/12

(54) **Bracket for motor vehicle**
Träger für Kraftfahrzeug
Support pour véhicule automobile

(30) Priority: 23.05.2001 JP 2001154457
(43) Date of publication of application: 27.11.2002
(73) Proprietor: NISSAN MOTOR COMPANY, LIMITED, Yokohama-shi, Kanagawa 221-0023 (JP)
(72) Inventor: Ishizu, Seiji, Atsugi-shi, Kanagawa 243-0031 (JP); Imagawa, Youichi, c/o Ryobi, Ltd, Fuchu-shi, Hiroshima 726-0033 (JP); Iwakuni, Nobuo, c/o Ryobi, Ltd, Fuchu-shi, Hiroshima 726-0033 (JP)
(74) Representative: Godwin, Edgar James

(56) References cited:
- US-A- 5 086 860
- US-A- 5 454 453
- US-A- 5 636 701
- PATENT ABSTRACTS OF JAPAN vol. 2000, no. 07, 29 September 2000 (2000-09-29) -& JP 2000 108935 A (FUJI HEAVY IND LTD), 18 April 2000 (2000-04-18)
- PATENT ABSTRACTS OF JAPAN vol. 007, no. 183 (M-235), 12 August 1983 (1983-08-12) -& JP 58 085716 A (NISSAN JIDOSHA KK), 23 May 1983 (1983-05-23)
- PATENT ABSTRACTS OF JAPAN vol. 1999, no. 09, 30 July 1999 (1999-07-30) -& JP 11 091620 A (DAIHATSU MOTOR CO LTD), 6 April 1999 (1999-04-06)

## Description

The present invention relates in general to brackets, and more particularly to brackets of a type that is applied to an automotive side member or the like. More specifically, the present invention is concerned with an engine mount bracket which is secured to the automotive side member to support the engine with the aid of engine support insulator.

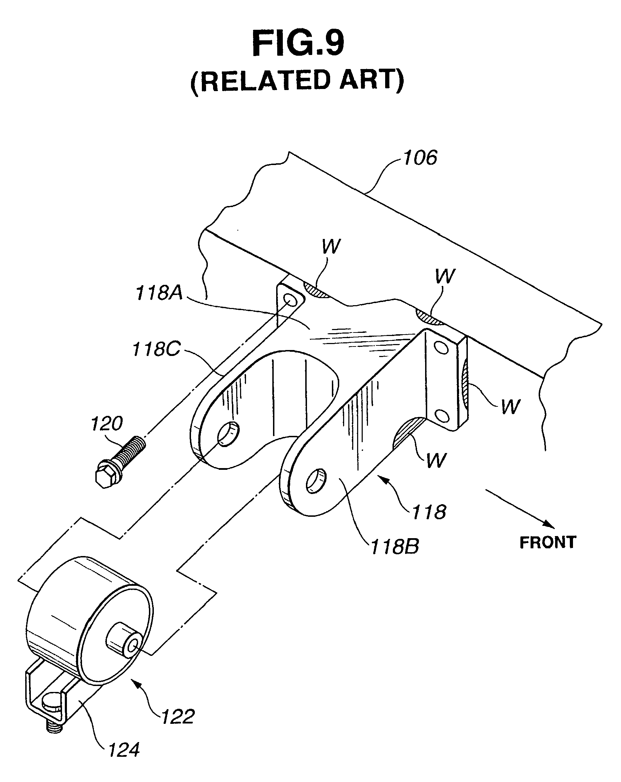

In order to clarify the task of the present invention, a related art of bracket will be briefly described with reference to Figs. 9 to 11 of the accompanying drawings.

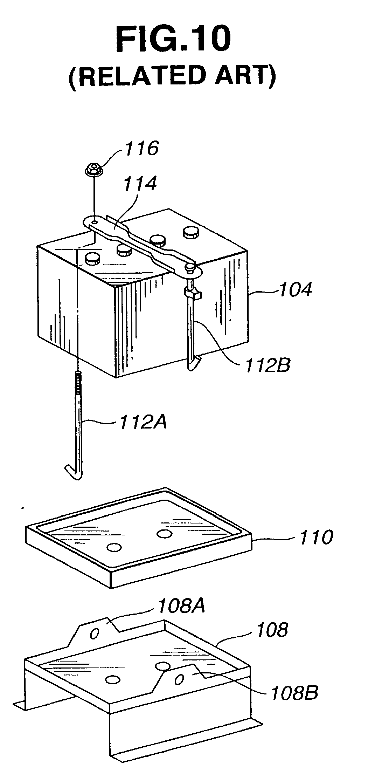

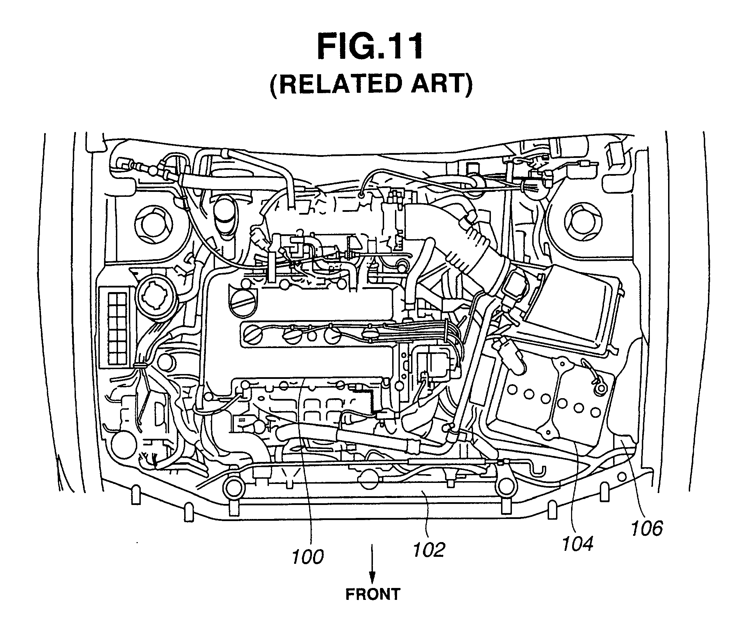

Fig. 11 shows a plan view of an engine room of a wheeled motor vehicle. In the drawing, denoted by 100 is an engine, 102 is a radiator and 104 is a battery. Denoted by 106 is a side member of a left front fender. Although not shown in the drawing, a side member of a right front fender is also provided, which has substantially same construction as side member 106 of the left front fender. The engine 100 is mounted on engine mount brackets that are fixed to both side members 106. As is seen from Fig. 10, battery 104 is mounted on a battery bracket 108 that is fixed via welding to side member 106. For this mounting, a battery tray 110 is put in a recessed upper part of battery bracket 108 and two hook rods 112A and 112B and a holder bar 114 are employed. That is, holder bar 114 is put on battery 104 and hook rod 112B has an upper end held by one end of holder bar 114 and a lower hook end engaged with an opening 108B formed in one raised side of battery bracket 108. The other hook rod 112A has an upper end passed through an opening formed in the other end of holder bar 114 and a lower hook end engaged with an opening 108A formed in the other raised side of battery bracket 108. A nut 116 is engaged with a threaded part of the upper end of hook rod 112A. When nut 116 is turned in a fastening direction, battery 104 can be tightly set on battery bracket 108.

Referring back to Fig. 11, to protect vehicle passengers upon a vehicle collision, particularly, head-on vehicle collision, measures are usually applied to side members 106 of left and right front fenders, which aim to collapse side members 106 when a certain impact force is applied thereto, thereby to absorb the impact force for safety of the vehicle passengers. However, in motor vehicles having a smaller engine room, providing the engine room with a space for effectively achieving such shock absorbing movement of side members 106 is difficult. Thus, in some of the motor vehicles having a smaller engine room, the engine mount brackets fixed to side members 106 are constructed to have a less rigidity, so that upon a vehicle collision, the engine mount brackets are collapsed assisting the shock absorbing operation of side members 106.

Hitherto, for easy shaping, engine mount brackets of cast metal have been widely used. One 118 of them is shown in Fig. 9, which comprises a base portion 118A which is secured to side member 106 through bolts 120 and a pair of arm portions 118B and 118C which extend inward from base portion 118A leaving a space therebetween. Denoted by numeral 122 is a cylindrical engine support insulator which is held by arm portions 118B and 118C of engine mount bracket 118. Engine support insulator 122 is equipped with a bracket 124 to which a given portion of engine 100 is bolted.

Denoted by references "w" are thinner portions of engine mount bracket 118, which are provided for achieving a breakable construction of bracket 118. However, selecting the position, number and size of such thinner portions "w" have needed a skilled, time-consumed and costly technique because of difficulty with which such breakable construction has to bear a normal or certain shock that may be produced when an associated motor vehicle rushes onto a raised edge of road under cruising.

It is therefore an object of the present invention to provide a bracket for use in a motor vehicle, which is free of the above-mentioned drawbacks.

US-A-5 086 860 discloses a cantilevered tray for supporting a battery in the engine compartment of a vehicle. The tray has three mutually perpendicular surfaces which are combined to constitute an edge portion.

JP-A-58085716 discloses a bracket in accordance with the preamble of claim 1.

The present invention provides an engine mount bracket as set forth in claim 1.

According to the present invention, there is provided an engine mount bracket which can be arranged between a side member and an engine support insulator. Upon a head-on vehicle collision, the bracket can be broken in such a way that the side member is ideally collapsed, thereby to effectively absorb the collision shock.

### BRIEF DESCRIPTION OF DRAWINGS

Fig. 1 is a perspective view of an engine mount bracket according to the present invention;
Fig. 2 is a plan view of the engine mount bracket of the invention;
Fig. 3 is a bottom view of the engine mount bracket of the invention;
Figs. 4A and 4B are plan views of the engine mount bracket respectively showing a condition wherein a certain portion is broken due to a head-on vehicle collision;
Fig. 5 is a perspective view of a battery which is mounted on the engine mount bracket of the invention through a first battery holder structure;
Fig. 6 is a view similar to Fig. 5, but showing a condition wherein another battery is mounted on the engine mount bracket through a second battery holder structure;
Fig. 7A is a plan view of the engine mount bracket of the invention in a condition wherein the bracket is practically incorporated with a cylindrical engine support insulator;
Fig. 7B is a side view of the engine mount bracket incorporated with the cylindrical engine support insulator;
Fig. 8 is a perspective view of a rear part of the engine mount bracket of the invention, showing a manner in which cracks begin to appear in the bracket;
Fig. 9 is a perspective view of a conventional unit including an engine mount bracket and a cylindrical engine support insulator;
Fig. 10 is an exploded view of a conventional battery holder structure; and
Fig. 11 is a plan view of an engine room of a wheeled motor vehicle.

### DETAILED DESCRIPTION OF THE EMBODIMENT

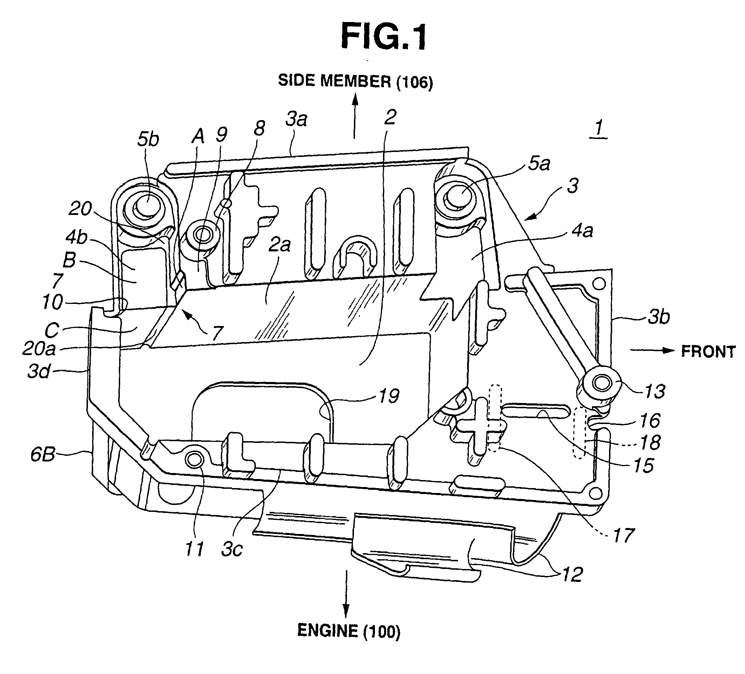

Referring to Figs. 1 to 3 of the drawings, there is shown an engine mount bracket 1 according to the present invention.

For clarifying a mounting position of the bracket 1 in an engine room of an associated motor vehicle, position of engine 100 and that of side member 106 of left front fender are shown in Fig. 1. The bracket 1 is constructed of an aluminum die-cast alloy or the like.

As is seen from Fig. 1, bracket 1 is formed at a generally center portion with a generally rectangular recess 2, so that a major portion of bracket 1 has a generally U-shaped cross section when viewed from a longitudinal direction of the motor vehicle. As will be described in detail hereinafter, bracket 1 is secured to the side member 106 through four bolts.

Bracket 1 has at an upper end of recess 2 a flange 3 which is constructed to surround the upper end of recess 2. That is, flange 3 comprises a first flange part 3a that projects toward side member 106, a second flange part 3b that projects forward of the vehicle, a third flange part 3c that projects toward the engine 100 and a fourth flange part 3d that projects backward of the vehicle.

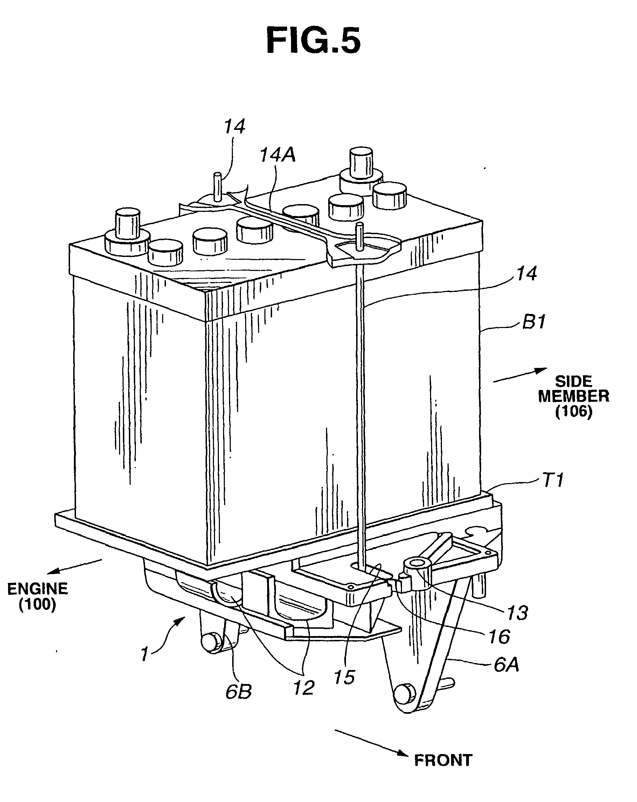

As is best seen from Fig. 1, first flange part 3a of flange 3 is formed at forward and rearward end portions thereof with front and rear recesses 4a and 4b respectively. A bottom wall of each recess 4a or 4b is formed with a mounting boss 5a or 5b to which the side member 106 is secured through a vertically extending connecting bolt (not shown). Furthermore, as seen from Figs. 1 and 5, first flange part 3a is formed on a lower surface thereof with front and rear mounting ribs 6A and 6B which are secured to the side member 106 through horizontally extending connecting bolts. That is, bracket 1 is tightly connected to side member 106 by four connecting bolts.

As is seen from Fig. 1, rear recess 4b of first flange part 3a comprises a first vertical surface A which faces rearward with respect to the vehicle body to which bracket 1 is connected, a second horizontal surface B which constitutes a bottom of rear recess 4b and a third vertical surface C which constitutes a rear part of a side vertical wall 2a of the rectangular recess 2. As shown, side vertical wall 2a is the surface facing the engine 100.

Second surface B is substantially perpendicular to first surface A and continuously connected therewith through an after-mentioned grooved portion 20, and third surface C is substantially perpendicular to second surface B and continuously connected therewith through grooved portion 20. Third surface C is substantially perpendicular to first surface A . That is, first, second and third surfaces A , B and C are mated or combined to constitute an edge portion 7.

It is now to be noted that between first and second surfaces A and B and between second and third surfaces B and C , there is no rounded junction portion, that is, first and second surfaces A and B (and second and third surfaces B and C ) extend substantially perpendicular to each other. With this, edge portion 7 is formed into a sharply angled shape. That is, due to such angled shape, concentration of stress would be made in the edge portion 7 when, due to a head-on vehicle collision or the like, a marked impact force is suddenly applied to the vehicle body. Such concentration of stress tends to crack edge portion 7 and its surrounding portion, and thus, engine mount bracket 1 tends to break around the mounting boss 5b.

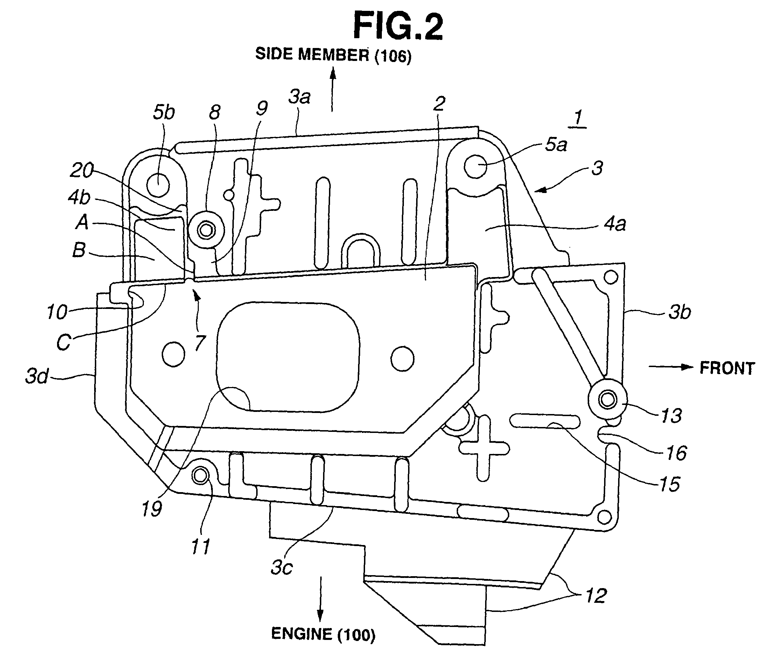

As is seen from Figs. 1 and 2, second horizontal surface B is surrounded by a shallow groove 20. As shown, shallow groove 20 has a straight extension 20a which extends vertically downward along third surface C to a bottom wall of rectangular recess 2. Due to provision of this shallow groove 20 and its extension 20a, production of cracks at edge portion 7 is controllably carried out upon a vehicle collision.

As is seen from Figs. 1 and 5, a rectangular parallelopiped battery B1 is adapted to be mounted on flange 3. For tightly mounting battery B1 on flange 3, a cylindrical boss portion 8 is formed on first flange part 3a near rear recess 4b. Boss portion 8 is formed with a threaded bore with which a threaded bolt (not shown) is engaged for securing battery B1 to flange 3. A shallow recess 9 is formed around boss portion 8.

As is seen from Figs. 1 and 2, fourth flange part 3d of flange 3 is formed with a vertically extending recess 10 which substantially faces the edge portion 7. Recess 10 is provided for promoting progression of cracks at edge portion 7.

Third flange part 3c of flange 3 is formed with a semicircular boss portion 11 at a position near fourth flange part 3d, as shown. Boss portion 11 is formed with a threaded bore with which a threaded bolt (not shown) is engaged for securing battery B1 to flange 3. Furthermore, third flange part 3c is formed along its outside edge with an axially extending gutter portion 12. As shown, gutter portion 12 comprises an inside longer gutter and an outside shorter gutter. Each gutter has a generally U-shaped cross section. These gutters are used for putting thereon wire harnesses that extend near the engine mount bracket 1. If desired, such gutters may face downward.

As is seen from Figs. 1 and 2, second flange part 3b of flange 3 is formed with a cylindrical boss portion 13. Boss portion 13 is formed with a threaded bore with which a threaded bolt (not shown) is engaged to fix the battery B1 to flange 3. Furthermore, second flange part 3b is formed with an elongate opening 15 which extends in an axial direction of the vehicle. As shown in Fig. 5, elongate opening 15 is used for fixing battery B1 to flange 3 by means of a fixing rod 14. Furthermore, as is seen from Fig. 1, near elongate opening 15, there is formed a cut 16 which is used for fixing a much larger battery (not shown) to flange 3 by means of fixing rod 14.

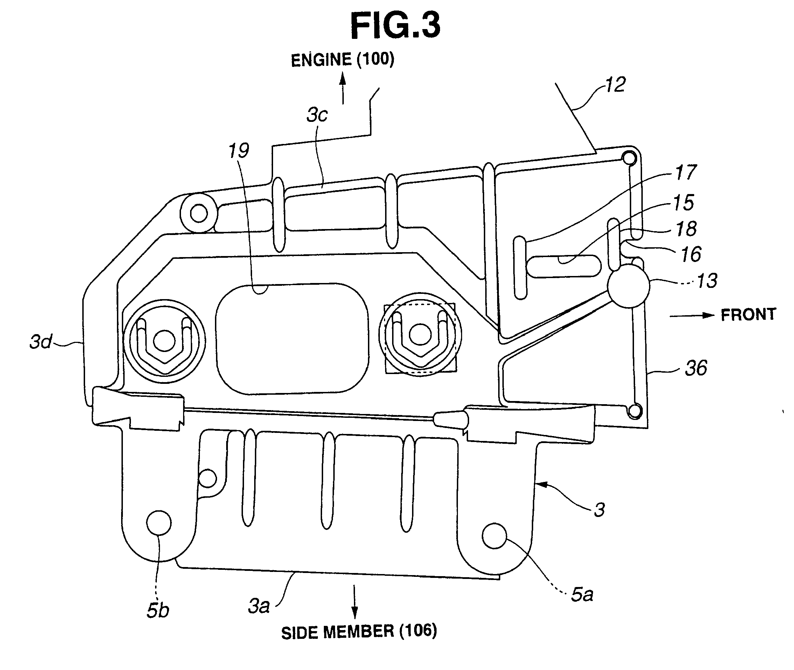

As is seen from Figs. 1 and 3, on a lower surface of second flange part 3b, there is formed a rib 17 to which a hooked leading end of fixing rod 14 passing through elongate opening 15 is engaged. Furthermore, on lower surface of second flange part 3b near cut 16, there is formed another rib 18 to which the hooked leading end of fixing rod 14 passing through cut 16 is engaged.

As is best seen from Fig. 1, the bottom wall of rectangular recess 2 is formed with a larger generally rectangular opening 19. This opening 19 is used for avoiding interference between the engine mount bracket 1 and a cylindrical engine support insulator which is to be located just below bracket 1.

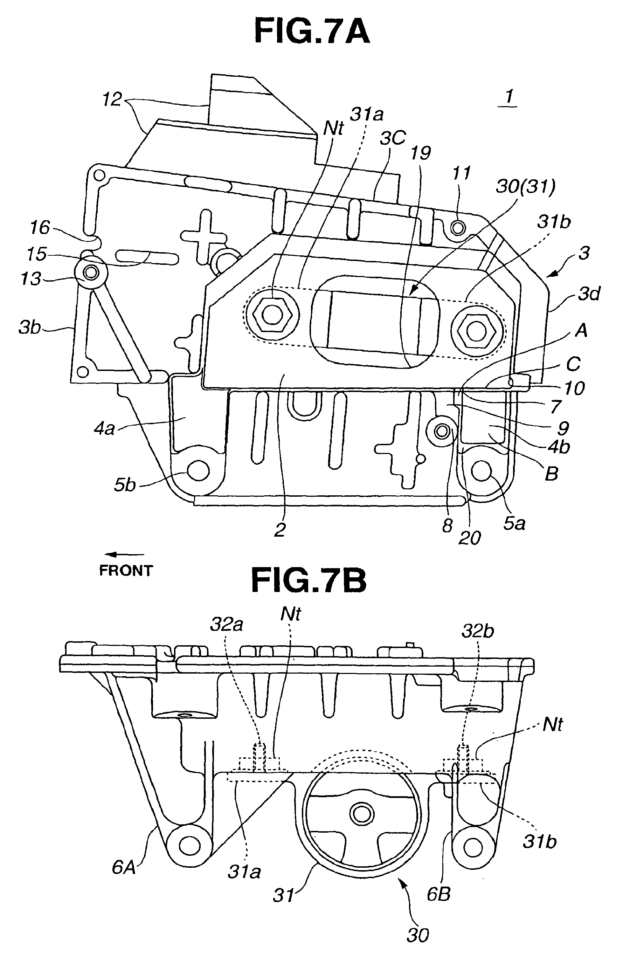

Referring to Figs. 7A and 7B, there is shown a manner in which a cylindrical engine support insulator 30 is connected to engine mount bracket 1. Engine support insulator 30 is held in a case 31 which has two arms 31a and 31b. As is best seen in Fig. 7B, both arm 31a and 31b have respective connecting bolts 32a and 32b welded thereto. Each bolt passes through an opening formed in the bottom wall of rectangular recess 2, and is engaged with a nut Nt. As is seen from Fig. 7B, an upper rounded part of support insulator 30 is accommodated in rectangular opening 19 without contacting peripheral edge of opening 19.

As has been mentioned hereinabove, front and rear mounting ribs 6A and 6B (see Fig. 5) projected downward from first flange part 3a of flange 3 of bracket 1 are bolted to front and rear portions of the side member 106.

Fig. 5 shows the manner in which battery B1 is mounted on engine mount bracket 1. As shown, two fixing rods 14 are employed for fixing battery B1 to bracket 1. Actually, a rectangular battery tray T1 is put on bracket 1 to mount thereon battery B1. Battery tray T1 is fixed to bracket 1 by means of a threaded bolt (not shown) engaged with the threaded bore of boss portion 11 of bracket 1. As shown, a holder bar 14A is put on battery B1, and front and rear fixing rods 14 extend downward from holder bar 14A. The front fixing rod 14 has a lower hook end which is engaged with rib 17 after passing through elongate opening 15, and the rear fixing rod 14 has a lower hook end which is hooked to a portion of battery tray T1. Although not shown in the drawing, nuts are operatively engaged with threaded upper ends of fixing rods 14.

Because of nature of elongate opening 15, various sizes of batteries B1 can be mounted on bracket 1. That is, when a larger battery is to be mounted, front fixing rod 14 is shallowly accommodated with elongate opening 15. Furthermore, when a much larger battery is to be mounted on bracket 1, front fixing rod 14 is accommodated in cut 16 having its hooked lower end engaged with rib 18.

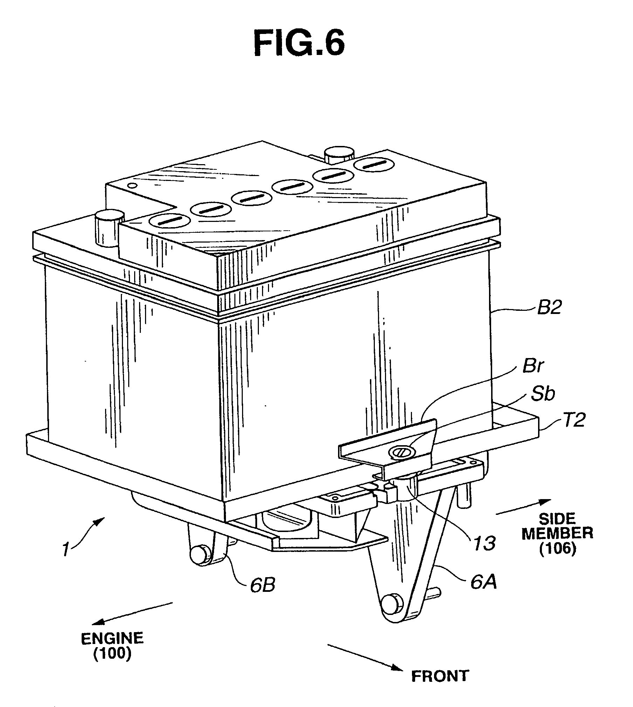

Fig. 6 shows the manner in which a different type of battery B2 is mounted on bracket 1. That is, in this case, battery B2 has three holding brackets Br secured thereto. Each bracket Br has a bolt opening. A battery tray T2 is put on engine mount bracket 1 and battery B2 is put on battery tray T2, and screw bolts Sb are used for fixing battery B2 to engine mount bracket 1, as shown. Each screw bolt Sb passing through bolt opening of bracket Br is engaged with the threaded bore of boss portion 8, 11 or 13 (see Fig. 1).

As will be understood from the above description, when in use, engine mount bracket 1 of the invention is tightly connected to side member 106 through four connecting bolts and as will be seen from Fig. 7B, bracket 1 holds engine support insulator 30 through two connecting bolts 32a and 32b. Battery B1 (see Fig. 5) or B2 (see Fig. 6) is thus tightly but detachably mounted on bracket 1.

In the following, advantages and advantageous matters achieved by the present invention will be described.

When an associated motor vehicle encounters a head-on collision, an impact force is applied to the engine mount bracket 1 concentrating a corresponding marked stress on edge portion 7 which is constructed by first, second and third surfaces A, B and C. With this, edge portion 7 is cracked and thus bracket 1 is completely broken. With this, side member 106 is permitted to collapse thereby effectively absorb the impact force for safety of vehicle passengers.

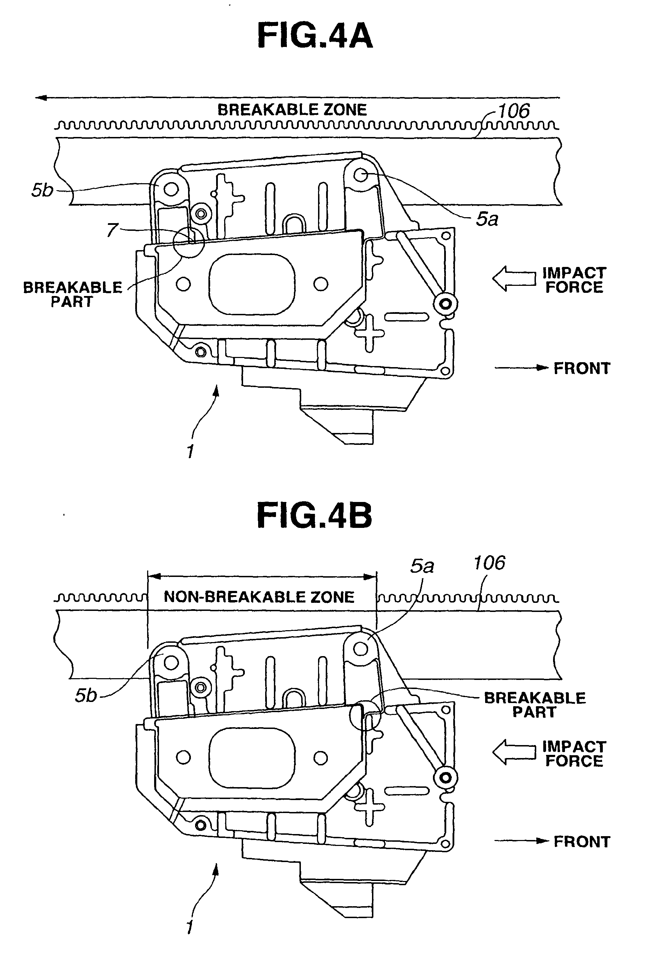

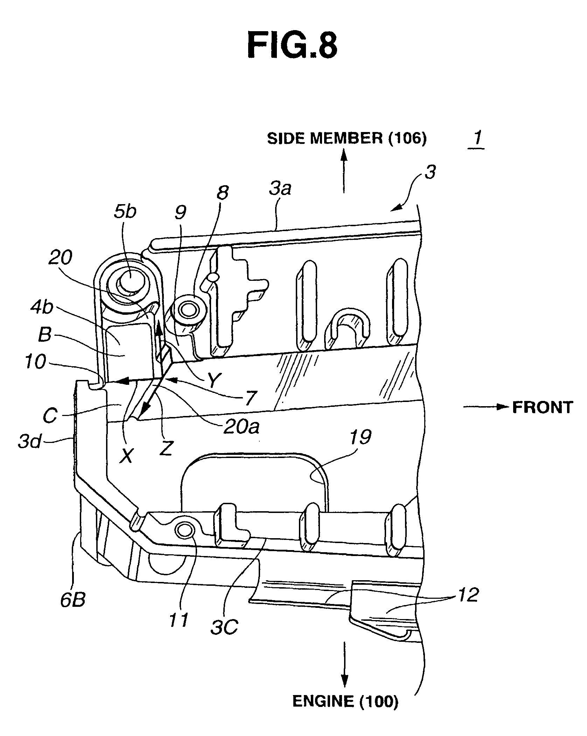

Since, as is seen from Fig. 4A, edge portion 7 of engine mount bracket 1 is located near the rear mounting boss 5b, breakage of edge portion 7 permits the side member 106 to have a sufficiently long breakable zone. That is, as is seen from Fig. 8, upon the vehicle collision, the groove 20 produces cracks therealong which get longer from edge portion 7 in the directions of X, Y and Z resulting in that engine mounting bracket 1 is shifted rearward leaving a part including rear mounting boss 5b and rear recess 4b at their original positions. This rearward shifting of bracket 1 is mainly caused by the cracks that get longer in the directions of X and Y. When the crack in the direction of Z reaches the bottom wall of rectangular recess 2, the bracket 1 is further shifted rearward leaving front and rear mounting ribs 6A and 6B at their original positions.

The above-mentioned advantageous matter will be easily understood from the following description that is directed to Fig. 4B. That is, if, as is seen from the drawing, a breakable part corresponding to edge portion 7 is located near the front mounting boss 5a, production of cracks at such breakable part fails to permit the side member 106 to have a sufficiently long breakable zone. In this case, a part of the side member 106, to which bracket 1 is actually connected, is not breakable. That is, even when the breakable part produces cracks, connection of bracket 1 with rear mounting boss 5b prevents bracket 1 from moving rearward and thus bracket 1 is not sufficiently broken.

Due to provision of recess 10 at fourth flange part 3d, breakage of the edge portion 7 is promoted upon vehicle collision. That is, upon the collision, edge portion 7 is cracked first and the cracks are instantly grown by recess 10.

Due to provision of rectangular opening 19 in the bottom wall of recess 2, the cylindrical engine support insulator 30 located below bracket 1 does not interfere with the same.

Since the engine mount bracket 1 described above is constructed to support thereon a battery, there is no need of providing a separate battery mount bracket, which brings about reduction in number of parts and thus reduction of cost.

Various types of batteries B1 and B2 can be mounted on the bracket 1 only by changing mounting members as is easily understood from Figs. 5 and 6.

Due to provision of gutter portion 12, the bracket 1 can stably support wire harnesses that extend near the engine 100. That is, gutter portion 12 can serve as a wire harness protector because of its U-shaped cross section.

Although the invention has been described above with reference to the embodiments of the invention, the invention is not limited to such embodiments as described above. Various modifications and variations of such embodiments may be carried out by those skilled in the art, in light of the above description.

## Claims

1. An engine mount bracket for use in a motor vehicle, the motor vehicle having an axially extending structural member (106) and an engine support insulator (30) which supports an engine (100),
the engine mount bracket comprising:
a portion (2) having a bottom wall which is connected to the engine support insulator (30); and
a flange portion (3) constructed to surround an upper end of the said portion (2), the flange portion (3) including a first flange part (3a) which is projected toward the structural member (106) and secured thereto at first and second connecting portions (5a, 6A; 5b, 6B), the second connecting portion (5b, 6B) being positioned to the rear of the first connecting portion (5a, 5B) with respect to the motor vehicle;
**characterised in that** the said portion (2) is a recessed portion (2) and the engine mount bracket includes a breakable portion (7) which is positioned nearer the second connecting portion (5b, 6B) than the first connection portion (5a, 6A) and breakable upon receiving a predetermined stress, the breakable portion including
a first portion having a first surface (A) defined thereon and facing rearward with respect to the vehicle;
a second portion having a second surface (B) defined thereon, the second surface being substantially perpendicular to the first surface (A) and continuously connected to the same; and
a third portion having a third surface (C) defined thereon, the third surface (C) being substantially perpendicular to both of the first and second surfaces (A, B) and continuously connected to the second surface (B);
the first, second, and third surfaces (A, B, C) being combined to constitute an edge portion (7) which is breakable upon receiving the predetermined stress.

2. A bracket as claimed in claim 1, in which the said edge portion (7) is provided with a groove (20, 20a).

3. A bracket as claimed in claim 1 or 2, in which the said second connecting portion (5b, 6b) is provided with a recess (4b) which is defined by the said first, second, and third surfaces (A, B, C).

4. A bracket as claimed in any preceding claim, in which the said flange portion (3) is formed with a battery mounting structure for mounting thereon a battery (B1, B2).

5. A bracket as claimed in claim 4, in which the battery mounting structure comprises:
boss portions (8, 11, 13) formed on an upper surface of said flange portion (3), each boss portion having a threaded bore;
a cut (16) provided at one end of the said flange portion (3); and
a rib (18) formed on a lower surface of the said flange portion (3), the rib (18) being positioned near the cut (16).

6. A bracket as claimed in claim 4, in which the battery mounting structure comprises:
boss portions (8, 11, 13) formed on an upper surface of the said flange portion (3), each boss portion having a threaded bore;
a longitudinally extending elongate opening (15) provided in one end portion of the said flange portion (3); and
a rib (17) formed on a lower surface of the said flange portion (3), the rib (17) being positioned near the said elongate opening (15).

7. A bracket as claimed in claim 5, in which the battery mounting structure further comprises:
a longitudinally extending elongate opening (15) formed in the said flange portion (3); and
another rib (17) formed on the lower surface of the said flange portion (3) and positioned near the said elongate opening (15).

8. A bracket as claimed in any preceding claim, in which the said flange portion (3) is formed with an axially extending gutter portion (12) for holding thereon a wire harness, the gutter portion having a generally U-shaped cross section.

9. A bracket as claimed in any preceding claim, in which the said edge portion (7) constituted by the said first, second, and third surfaces (A, B, C) has a reduced mechanical strength as compared with surrounding portions of the said edge portion.

## Patentansprüche

1. Motoraufhängungsträger für eine Verwendung in einem Kraftfahrzeug, wobei das Kraftfahrzeug ein sich axial erstreckendes Strukturelement (106) und einen Motoraufhängungsisolator (30) aufweist, der einen Motor (100) trägt, wobei der Motoraufhängungsträger aufweist:
einen Abschnitt (2) mit einer unteren Wand, die mit dem Motoraufhängungsisolator (30) verbunden ist; und
einen Flanschabschnitt (3), der konstruiert ist, um ein oberes Ende des Abschnittes (2) zu umgeben, wobei der Flanschabschnitt (3) ein erstes Flanschteil (3a) umfasst, das in Richtung des Strukturelementes (106) vorsteht und daran an einem ersten und zweiten Verbindungsabschnitt (5a, 6A; 5b, 6B) gesichert ist, wobei der zweite Verbindungsabschnitt (5b, 6B) an der Hinterseite des ersten Verbindungsabschnittes (5a, 6A) mit Bezugnahme auf das Kraftfahrzeug positioniert ist;
**dadurch gekennzeichnet, dass** der Abschnitt (2) ein ausgesparter Abschnitt (2) ist und der Motoraufhängungsträger einen brechbaren Abschnitt (7) umfasst, der näher am zweiten Verbindungsabschnitt (5b, 6B) als am ersten Verbindungsabschnitt (5a, 6A) positioniert ist und beim Aufnehmen einer vorgegebenen Belastung brechbar ist, wobei der brechbare Abschnitt umfasst:
einen ersten Abschnitt mit einer darauf definierten ersten Fläche (A), und die mit Bezugnahme auf das Fahrzeug nach hinten zeigt;
einen zweiten Abschnitt mit einer darauf definierten zweiten Fläche (B), wobei die zweite Fläche im Wesentlichen senkrecht zur ersten Fläche (A) verläuft und kontinuierlich mit der gleichen verbunden ist; und
einen dritten Abschnitt mit einer darauf definierten dritten Fläche (C), wobei die dritte Fläche (C) im Wesentlichen senkrecht zu sowohl der ersten als auch zweiten Fläche (A, B) verläuft und kontinuierlich mit der zweiten Fläche (B) verbunden ist;
wobei die erste, zweite und dritte Fläche (A, B, C) kombiniert werden, um einen Randabschnitt (7) zu bilden, der beim Aufnehmen der vorgegebenen Belastung brechbar ist.

2. Träger nach Anspruch 1, bei dem der Randabschnitt (7) mit einer Nut (20, 20a) versehen ist.

3. Träger nach Anspruch 1 oder 2, bei dem der zweite Verbindungsabschnitt (5b, 6B) mit einer Aussparung (4b) versehen ist, die durch die erste, zweite und dritte Fläche (A, B, C) definiert wird.

4. Träger nach einem der vorhergehenden Ansprüche, bei dem der Flanschabschnitt (3) mit einer Batterieaufhängungsstruktur für das Montieren einer Batterie (B1; B2) darauf gebildet wird.

5. Träger nach Anspruch 4, bei dem die Batterieaufhängungsstruktur aufweist:
Vorsprungsabschnitte (8, 11, 13), die auf einer oberen Fläche des Flanschabschnittes (3) gebildet werden, wobei jeder Vorsprungsabschnitt eine Gewindebohrung aufweist;
einen Einschnitt (16), der an einem Ende des Flanschabschnittes (3) vorhanden ist; und
eine Rippe (18), die auf einer unteren Fläche des Flanschabschnittes (3) gebildet wird, wobei die Rippe (18) in der Nähe des Einschnittes (16) positioniert ist.

6. Träger nach Anspruch 4, bei dem die Batterieaufhängungsstruktur aufweist:
Vorsprungsabschnitte (8, 11, 13), die auf einer oberen Fläche des Flanschabschnittes (3) gebildet werden, wobei jeder Vorsprungsabschnitt eine Gewindebohrung aufweist;
eine sich in Längsrichtung erstreckende längliche Öffnung (15), die in einem Endabschnitt des Flanschabschnittes (3) vorhanden ist; und
eine Rippe (17), die auf einer unteren Fläche des Flanschabschnittes (3) gebildet wird, wobei die Rippe (17) in der Nähe der länglichen Öffnung (15) positioniert ist.

7. Träger nach Anspruch 5, bei dem die Batterieaufhängungsstruktur außerdem aufweist:
eine sich in Längsrichtung erstreckende längliche Öffnung (15), die im Flanschabschnittes (3) gebildet wird; und
eine weitere Rippe (17), die auf der unteren Fläche des Flanschabschnittes (3) gebildet wird und in der Nähe der länglichen Öffnung (15) positioniert ist.

8. Träger nach einem der vorhergehenden Ansprüche, bei dem der Flanschabschnitt (3) mit einem sich axial erstreckenden Rinnenabschnitt (12) gebildet wird, um darin einen Kabelbaum aufzunehmen, wobei der Rinnenabschnitt einen im Allgemeinen U-förmigen Querschnitt aufweist.

9. Träger nach einem der vorhergehenden Ansprüche, bei dem der Randabschnitt (7), der durch die erste, zweite und dritte Fläche (A, B, C) gebildet wird, eine verringerte mechanische Festigkeit verglichen mit umgebenden Abschnitten des Randabschnittes aufweist.

## Revendications

1. Support de bâti de moteur destiné à être utilisé dans un véhicule automobile, le véhicule automobile étant pourvu d'un élément structurel (106) qui s'étend axialement et d'un isolateur de support de moteur (30) qui supporte un moteur (100), le support de bâti de moteur comprenant:
une portion (2) pourvue d'une paroi inférieure qui est reliée à l'isolateur de support de moteur (30); et
une portion de bride (3) construite pour entourer une extrémité supérieure de ladite portion (2), la portion de bride (3) incluant une première partie de bride (3a) qui fait saillie en direction de l'élément structurel (106) et est fixée sur celui-ci au niveau de première et seconde portions de connexion (5a, 6A; 5b, 6B), la seconde portion de connexion (5b, 6B) étant positionnée à l'arrière de la première portion de connexion (5a, 6A) par rapport au véhicule automobile;
**caractérisé par le fait que** ladite portion (2) est une portion évidée (2) et le support de bâti de moteur inclut une portion cassable (7) qui est positionnée plus près de la seconde portion de connexion (5b, 6B) que de la première portion de connexion (5a, 6A) et peut être cassée si elle est soumise à une contrainte prédéterminée, la portion cassable incluant
une première portion ayant une première surface (A) définie sur la portion et tournée vers l'arrière par rapport au véhicule;
une deuxième portion ayant une deuxième surface (B) définie sur la portion, la deuxième surface étant essentiellement perpendiculaire à la première surface (A) et reliée de manière continue à celle-ci; et
une troisième portion ayant une troisième surface (C) définie sur la portion, la troisième surface (C) étant essentiellement perpendiculaire à la fois à la première et à la deuxième surfaces (A, B) et reliée de manière continue à la deuxième surface (B);
les première, deuxième et troisième surfaces (A, B, C) étant combinées pour constituer une portion de bord (7) qui peut être cassée si elle est soumise à la contrainte prédéterminée.

2. Support selon la revendication 1, dans lequel ladite portion de bord (7) est pourvue d'une rainure (20, 20a).

3. Support selon la revendication 1 ou 2, dans lequel ladite seconde portion de connexion (5b, 6B) comporte un évidement (4b) qui est défini par lesdites première, deuxième et troisième surfaces (A, B, C).

4. Support selon l'une des revendications précédentes, dans lequel ladite portion de bride (3) est formée avec une structure de montage de batterie sur laquelle une batterie (B1; B2) sera montée.

5. Support selon la revendication 4, dans lequel la structure de montage de batterie comprend:
des portions protubérantes (8, 11, 13) formées sur une surface supérieure de ladite portion de bride (3), chaque portion protubérante étant pourvue d'un alésage fileté;
une découpure (16) prévue à une extrémité de ladite portion de bride (3); et
une nervure (18) formée sur une surface inférieure de ladite portion de bride (3), la nervure (18) étant positionnée près de la découpure (16).

6. Support selon la revendication 4, dans lequel la structure de montage de batterie comprend:
des portions protubérantes (8, 11, 13) formées sur une surface supérieure de ladite portion de bride (3), chaque portion protubérante étant pourvue d'un alésage fileté;
une ouverture allongée (15) s'étendant de manière longitudinale prévue dans une portion d'extrémité de ladite portion de bride (3); et
une nervure (17) formée sur une surface inférieure de ladite portion de bride (3), la nervure (17) étant positionnée près de ladite ouverture allongée (15).

7. Support selon la revendication 5, dans lequel la structure de montage de batterie comprend, en outre:
une ouverture allongée (15) s'étendant de manière longitudinale formée dans ladite portion de bride (3); et
une autre nervure (17) formée sur la surface inférieure de ladite portion de bride (3) et positionnée près de ladite ouverture allongée (15).

8. Support selon l'une des revendications précédentes, dans lequel ladite portion de bride (3) est formée avec une portion de gouttière (12) s'étendant de manière axiale et destinée à recevoir sur elle un faisceau de câbles, la portion de gouttière étant pourvue d'une section transversale ayant globalement une forme en U.

9. Support selon l'une des revendications précédentes, dans lequel ladite portion de bord (7) constituée par lesdites première, deuxième et troisième surfaces (A, B, C) a une résistance mécanique réduite par rapport à des portions qui entourent ladite portion de bord.
